# EUROPÄISCHE PATENTSCHRIFT

(11) **EP 1 242 268 B1**
(45) Veröffentlichungstag und Bekanntmachung des Hinweises auf die Patenterteilung: **30.03.2005**
(21) Anmeldenummer: 00944012.4
(22) Anmeldetag: 06.07.2000
(51) Int. Cl.: B60S 1/04

(54) **BEFESTIGUNGSANORDNUNG FÜR EINE SCHEIBENWISCHERANLAGE AN EINER FAHRZEUGKAROSSERIE**
DEVICE FOR MOUNTING A WINDSHIELD WIPER ON A VEHICLE BODY
DISPOSITIF DE FIXATION D'UN ENSEMBLE ESSUIE-GLACE SUR LA CARROSSERIE D'UN VEHICULE

(30) Priorität: 19.07.1999 DE 19933767
(43) Veröffentlichungstag der Anmeldung: 25.09.2002
(73) Patentinhaber: Volkswagen Aktiengesellschaft, 38436 Wolfsburg (DE)
(72) Erfinder: OSTROWSKI, Wolfgang, D-38446 Wolfsburg (DE)
(86) Internationale Anmeldenummer: PCT/EP2000/006421
(87) Internationale Veröffentlichungsnummer: WO 2001/005634

(56) Entgegenhaltungen:
- EP-A- 0 798 183
- DE-A- 3 116 821
- DE-A- 19 833 404
- FR-A- 2 770 880
- GB-A- 2 228 188

## Beschreibung

Die Erfindung betrifft eine Befestigungsanordnung für eine Scheibenwischerantage an einer Fahrzeugkarosserie, insbesondere für eine Scheibenwischeranlage mit einem Gestängeantrieb.

Scheibenwischeranfagen mit einem Gestängeantrieb weisen vorteilhafter- und heute auch üblicherweise einen am Fahrzeugkörper anordbaren Träger mit einem aus einem vormontierten Wischermotor, einem Getriebe und einer Antriebskurbel bestehenden Antrieb und in der Regel zwei im Abstand zur Antriebskurbel angeordnete Lagerböcke auf, in denen jeweils eine Antriebswelle für einen Wischerarm angeordnet ist, mit der ein Schwenkhebel drehfest verbunden ist. Der Wischermotor und das Getriebe sind bevorzugt zwischen den Lagerböcken angeordnet, können aber auch im Bereich eines der Lagerböcke angeordnet sein. Die Antriebskurbel ist durch ein Antriebsgestänge gelenkig mit dem jeweiligen Schwenkhebel verbunden. Eine derartig vormontierte Scheibenwischeranlage ist/ wird als komplette Baueinheit an der Fahrzeugkarosserie befestigt, wobei der Träger bevorzugt an wenigstens zwei auseinanderliegenden Stellen, insbesondere an den Lagerböcken, und an einer dritten Stelle mit der Fahrzeugkarosserie verbunden ist, derart, daß die durch die Wischerbewegung hervorgerufenen Reaktionskräfte aufgenommen werden können und eine Schwenkbewegung des Trägers um eine durch die beiden Lagerböcke bestimmte Achse unterbleibt (Drehmomentenabstützung).

Eine derartige Befestigungsanordnung ist in der DOS 2 052 139 beschrieben. Der Träger ist dort T-förmig gestaltet und an den Enden seines horizontal an der Fahrzeugkarosserie anzuordnenden Armes mit Lagerböcken für die Antriebswellen und am freien Ende des etwa in der Mitte zwischen den Lagerböcken angeordneten Querarmes mit einem Befestigungselement versehen. Dabei ist die Befestigungsanordnung derart getroffen, daß der Träger in seiner vorbestimmten Stellung an der Fahrzeugkarosserie an einem im Bereich seines Querarmes gegebenen Gelenkpunkt anliegt und bei einer Verschraubung des Querarmes an seinem Befestigungspunkt um diesen Gelenkpunkt schwenkt, so, daß die Lagerböcke durch Öffnungen im Karosserieblech treten und den Träger festlegen.

Bevorzugt ist der Träger über eine Feder oder ein anderes elastisches Befestigungselement an dem Befestigungspunkt befestigt, oder er kann mit einer Halterung oder einem Befestigungsglied an dem Karosserieblech verschraubt oder verbolzt sein, wobei ein solches Glied vorzugsweise wie durch ein Gummikissen von der Karosserie getrennt ist, so daß die Übertragung von Vibrationen und Geräuschen auf ein Minimum herabgesetzt ist. Der Träger ist somit an drei Stellen an der Fahrzeugkarosserie fixiert. Für die Montage mit Hilfe des ausgebildeten Gelenkpunktes und für die Verschraubung des Trägers am Befestigungspunkt ist ein ausreichender, frei zugänglicher Montageraum erforderlich. Letzteres trifft auch für Befestigungsanordnungen zu, bei denen drei Verschraubungspunkte für die Scheibenwischeranlage bzw. deren Träger vorgesehen sind, wie beispielsweise für die Befestigungsanordnung gemäß der EP 0 497 645 B1 und der EP 0 497 645 B1.

Es ist deshalb Aufgabe der Erfindung, eine Befestigungsanordnung mit drei Befestigungspunkten für eine Scheibenwischeranlage nach dem Oberbegriff des Anspruchs 1 zu schaffen, für die vergleichsweise wenig Montageraum erforderlich und die erleichtert durchzuführen ist.

Diese Aufgabe wird bei einer Befestigungsanordnung mit den Merkmalen des Anspruchs 1 gelöst.

Die Erfindung besteht darin, daß eine in bekannter Weise einen langgestreckten Träger aufweisende Scheibenwischeranlage, an dem der Antrieb mit einem Wischermotor, einem Getriebe und einer Antriebskurbel und wenigstens der Antriebswelle für einen Wischerarm sowie ein zwischen der Antriebskurbel und einem mit der Antriebswelle drehfest verbundenen Schwenkhebel wirkendes Übertragungsgestänge angeordnet sind, mit dem Träger an drei Befestigungspunkten an der Fahrzeugkarosserie derart verbunden ist, daß zwei Befestigungspunkte an den Enden des Trägers, d.h. im Abstand zueinander entlang der Trägerlängsachse, zur Herstellung einer festen Verbindung mit der Fahrzeugkarosserie vorgesehen sind, und daß der dritte Befestigungspunkt im Bereich zwischen den beiden Befestigungspunkten, jedoch im Abstand von der Verbindungslinie (-geraden) zwischen diesen vorgesehen und als Steckverbindungselement einer schwingungs- und geräuschgedämpften Steckverbindung für ein an der Fahrzeugkarosserie angeordnetes Gegenstück ausgebildet und die Steckrichtung im wesentlichen quer zur Rotationsachse der Antriebskurbel gegeben ist.

Damit ist eine zuverlässige Drehmomentabstützung bzw. zuverlässige Aufnahme der durch die Scheibenwischerbewegung verursachten Reaktionskräfte des mit den vorstehend genannten Antriebselementen bestückten Trägers gegeben, so daß Schwenkbewegungen des Trägers um eine durch die beiden ersten Befestigungspunkte bestimmte Achse verhindert werden. Zudem wird die Übertragung von Schwingungen und Erschütterungen sowie Geräuschen minimiert. Die Montage des bestückten Trägers ist sehr erleichtert, da der Träger mit seinem Steckverbindungselement auf einfache Weise von vom an dem an der Fahrzeugkarosserie ausgebildeten oder angeordneten Steckverbindungseiement fixiert wird und anschließend, ebenfalls auf einfache Weise, an den beiden anderen leicht zugänglichen Befestigungspunkten fixiert, insbesondere nur verschraubt zu werden braucht Der zur Herstellung der Steckverbindung erforderliche Montageraum ist vergleichsweise klein, so daß die Steckverbindung auch an eine Stelle gelegt werden kann, wo eine Schraubverbindung beispielsweise aus Platzgründen nicht hergestellt werden könnte.

Dabei kann das Steckverbindungselement vorteilhaft an einer am Träger angeordneten Konsole ausgebildet oder angeordnet sein.

Bevorzugt ist das Steckverbindungselement eine Steckbuchse aus einem elastischen Dämpfungsmaterial, insbesondere Gummi, für einen an der Fahrzeugkarosserie angeordneten Steckbolzen, da sich eine derartige Steckbuchse an der Fahrzeugkarosserie nur mit größerem Aufwand als an der Konsole anordnen läßt. Um die Steckrichtung einhalten zu können, muß der die Steckbuchse tragende Bereich der Konsole abgewinkelt sein. Zur Erleichterung des Steckvorganges ist die Steckbuchse karosserieseitig mit einer konischen Einführöffnung versehen.

Die Erfindung wird nachstehend anhand eines Ausführungsbeispiels erläutert. in den zugehörigen Zeichnungen zeigen, im wesentlichen schematisch:
- Fig. 1:: eine Ansicht vom Träger mit den an diesem vormontierten Antriebsteilen der Scheibenwischeranlage in Steckrichtung und
- Fig. 2 :: eine Draufsicht auf die Anordnung.

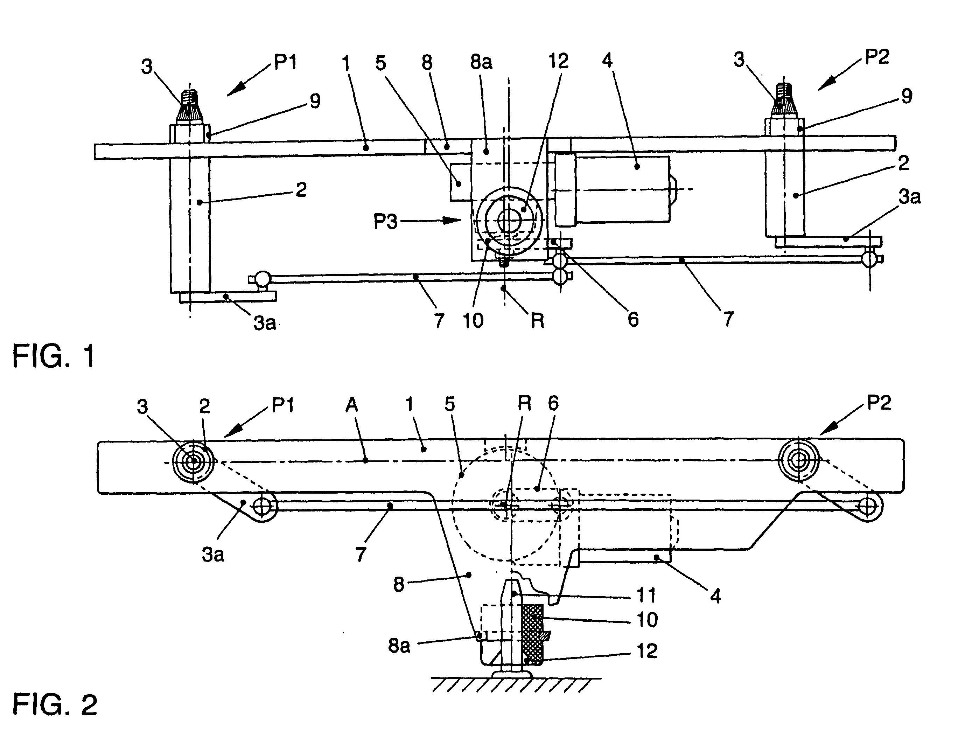

In Fig. 1 ist ein Träger 1 mit zwei Lagerböcken 2 für jeweils eine Antriebswelle 3 für einen Wischerarm und mit einem vormontierten Wischermotor 4 mit einem Getriebe 5, einer mit diesem verbundenen Antriebskurbel 6 und einem Antriebsgestänge 7 dargestellt, wobei dieses am Hebelarm 6 und jeweils an einem an der jeweiligen Antriebswelle 3 drehfest angeordneten Schwenkhebel 3a angelenkt ist. Im Bereich des Getriebes 5 ist am Träger 1 eine Konsole 8 ausgebildet, die das Getriebe 5 überdeckt und eine rechtwinklige Abwinklung 8a aufweist.

Diese Baueinheit weist drei Befestigungspunkte P1 bis P3 auf. Zwei Befestigungspunkte P1 und P2 sind durch die Lagerböcke 2 gegeben, die oberhalb des Trägers 1 mit einem Außengewinde 9 für eine Schraubverbindung mit der Fahrzeugkarosserie versehen sind. Der dritte Befestigungspunkt P3 ist an der Abwinklung 8a der Konsole 8, also im Bereich zwischen den ersten beiden Befestigungspunkten und im Abstand von der Längsachse A des Trägers 1 (Fig. 2), als Steckverbindungselement ausgebildet, wobei die Steckrichtung quer zur Rotationsachse R des Hebelarmes gegeben ist. Das Steckverbindungselement ist eine aus Gummi bestehende Steckbuchse 10 für einen an der Fahrzeugkarosserie fest angeordneten Steckbolzen 11.

Fig. 2 zeigt die Befestigungsanordnung in der Draufsicht, in der insbesondere die Anordnung und Gestaltung der Steckbuchse 10 zu erkennen sind. Diese ist ein dickwandiger zylindrischer Gummikörper, der in der Mitte seiner Mantelfläche eine umlaufende Nut zur Anordnung in einer kreisrunden Ausnehmung an der Abwinklung 8a der Konsole 8 aufweist. Karosseriewandseitig weist die Steckbuchse 10 eine konische Einführöffnung 12 für den Steckbolzen 11 auf, wobei die zylinderförmige Stecköffnung für diesen einen geringeren Durchmesser als der Steckbolzen 11 hat, um einen festen elastischen Sitz der Steckverbindung sicherzustellen.

Die dargestellte Baueinheit wird an der Fahrzeugkarosserie montiert, indem zunächst die Steckbuchse 10 auf den Steckbolzen 11 gedrückt wird, wobei unter radialer Kompression des Gummikörpers eine elastische Verbindung geschaffen wird. Anschließend werden die beiden Lagerböcke 2 in Öffnungen im Karosserieblech (nicht dargestellt) positioniert und mit einer Schraubverbindung festgelegt.

### BEZUGSZEICHENLISTE

- 1: Träger
- 2: Lagerbock
- 3: Antriebswelle
- 3a: Schwenkhebel
- 4: Wischermotor
- 5: Getriebe
- 6: Antriebskurbel
- 7: Antriebsgestänge
- 8: Konsole
- 8a: Abwinklung
- 9: Außengewinde
- 10: Steckbuchse
- 11: Steckbolzen
- 12: Einführöffnung
- A: Achse
- R: Rotationsachse
- P1: Befestigungspunkt
- P2: Befestigungspunkt
- P3: Befestigungspunkt

## Patentansprüche

1. Befestigungsanordnung für eine Scheibenwischeranlage, die einen langgestreckten Träger (1) mit einem vormontierten Wischermotor (4), einem Getriebe (5), einer Antriebskurbel (6) und einem an dieser und wenigstens der Antriebswelle (3) für einen Wischerarm über einen Schwenkhebel (3a) angelenkten Gestänge (7) aufweist, wobei der Träger (1) an drei Befestigungspunkten (P1, P2, P3) mit der Fahrzeugkarosserie verbunden ist, zwei Befestigungspunkte (P1, P2) mit den Lagerböcken (2) für Antriebswellen (3) gegeben sind, die (2) im Abstand entlang der Längsachse des Trägers (1) angeordnet und oberhalb des Trägers (1) jeweils ein Außengewinde (9) zur Herstellung einer Schraubverbindung mit der Fahrzeugkarosserie aufweisen, und der dritte Befestigungspunkt (P3) im Abstand von der Verbindungslinie zwischen diesen Befestigungspunkten vorgesehen ist, **dadurch gekennzeichnet , dass** der dritte Befestigungspunkt (P3) als Steckverbindungselement (10) einer schwingungs- und geräuschgedämpften Steckverbindung für ein an der Fahrzeugkarosserie fest angeordnetes Gegenstück (11) ausgebildet ist, wobei die Steckrichtung im wesentlichen quer zur Rotationsachse des das Antriebsgestänge (7) betätigenden Antriebskurbel (6) gegeben ist.

2. Befestigungsanordnung nach Anspruch 1, **dadurch gekennzeichnet, daß** das Steckverbindungselement (10) an einer am Träger (1) angeordneten Konsole (8) ausgebildet ist.

3. Befestigungsanordnung nach Anspruch 2, **dadurch gekennzeichnet, daß** das Steckverbindungselement eine Steckbuchse (10) aus einem elastischen Dämpfungsmaterial für einen an der Fahrzeugkarosserie angeordneten Steckbolzen (11) ist, und daß der die Steckbuchse (10) tragende Teil der Konsole (8) eine Abwinklung (8a) ist.

4. Befestigungsanordnung nach Anspruch 3, **dadurch gekennzeichnet, daß** die Steckbuchse (10) steckbolzenseitig eine konische Einführöffnung (12) aufweist.

## Claims

1. Arrangement for mounting a wiper system, which arrangement has an elongate support (1) with a prefitted wiper motor (4), a gear mechanism (5), a driving crank (6) and a linkage (7), which is coupled to the latter and to at least the drive shaft (3) for a wiper arm via a pivot lever (3a), the support (1) being connected to the vehicle body at three mounting points (P1, P2, P3), two mounting points (P1, P2) being provided with the pillow blocks (2) for drive shafts (3), which pillow blocks (2) are arranged spaced apart along the longitudinal axis of the support (1), and, above the support (1), the said mounting points each having an external thread (9) for producing a screw connection to the vehicle body, and the third mounting point (P3) being provided at a distance from the connecting line between the mounting points, **characterized in that** the third mounting point (P3) is designed as a plug-in connecting element (10) of a vibration- and noise-damped plug-in connection for a counterpart (11) arranged fixedly on the vehicle body, the plug-in direction being provided essentially transversely to the axis of rotation of the driving crank (6) actuating the driving linkage (7).

2. Mounting arrangement according to Claim 1, **characterized in that** the plug-in connecting element (10) is formed on a bracket (8) arranged on the support (1).

3. Mounting arrangement according to Claim 2, **characterized in that** the plug-in connecting element is a plug-in bushing (10) of an elastic damping material for a plug-in bolt (11) arranged on the vehicle body, and **in that** that part of the bracket (8) which supports the plug-in bushing (10) is an angled section (8a).

4. Mounting arrangement according to Claim 3, **characterized in that** the plug-in bushing (10) has a conical introductory opening (12) on the plug-in bolt side.

## Revendications

1. Dispositif de fixation d'un ensemble essuie-glace, qui présente un support (1) allongé avec un moteur d'essuie-glace (4) prémonté, une transmission (5), une manivelle de commande (6) et une tringlerie (7) articulée à ladite manivelle et à au moins l'arbre d'entraînement (3) d'un bras d'essuie-glace par un levier pivotant (3a), dans lequel le support (1) est relié par trois points de fixation (P1, P2, P3) à la carrosserie du véhicule, deux points de fixation (P1, P2) avec les supports de palier (2) des arbres d'entraînement (3) sont prévus, lesquels sont espacés (2) le long de l'axe longitudinal du support (1) et présentent au dessus du support (1) respectivement un pas de vis externe (9) pour établir une liaison par vissage avec la carrosserie du véhicule et le troisième point de fixation (P3) est prévu à une certaine distance de la ligne de liaison entre lesdits points de fixation, **caractérisé en ce que** le troisième point de fixation (P3) est configuré comme un élément de raccordement (10) d'un connecteur atténuateur d'oscillations et de bruits pour une contre-pièce (11) disposée solidement sur la carrosserie du véhicule, moyennant quoi la direction de raccordement est prévue essentiellement transversalement par rapport à l'axe de rotation de la manivelle de commande (6) actionnant la tringlerie d'entraînement (7).

2. Dispositif de fixation selon la revendication 1, **caractérisé en ce que** l'élément de raccordement (10) est réalisé sur une console (8) disposée sur le support (1).

3. Dispositif de fixation selon la revendication 2, **caractérisé en ce que** l'élément de raccordement est un connecteur femelle (10) en matériau atténuateur élastique pour une tige débrochable (11) disposée sur la carrosserie du véhicule et **en ce que** la partie de la console (8) qui supporte le connecteur femelle (10) est un dispositif d'inclinaison (8a).

4. Dispositif de fixation selon la revendication 3, **caractérisé en ce que** le connecteur femelle (10) présente du côté de la tige débrochable une ouverture d'introduction conique (12).
